# FASCICULE DE BREVET EUROPEEN

(11) **EP 3 669 066 B1**
(45) Date de publication et mention de la délivrance du brevet: **07.06.2023**
(21) Numéro de dépôt: 18808410.7
(22) Date de dépôt: 28.09.2018
(51) Int. Cl.: F02M 35/10, G01F 1/684, G01F 15/00, F02M 35/12, F15D 1/02, G01F 5/00

(54) **ENSEMBLE D'ADMISSION D'AIR**
INTAKE AIR ASSEMBLY
LUFTEINLASSBAUGRUPPE

(30) Priorité: 06.10.2017 FR 1759409
(43) Date de publication de la demande: 24.06.2020
(73) Titulaire: NOVARES France, 92140 Clamart (FR)
(72) Inventeur: SPINGLER, Gregory, 59230 Saint Amand Les Eaux (FR)
(74) Mandataire: Germain Maureau
(86) Numéro de dépôt international: PCT/FR2018/052386
(87) Numéro de publication internationale: WO 2019/068992

(56) Documents cités:
- DE-A1-102012 211 126
- GB-A- 2 402 971
- US-A- 5 918 279

## Description

La présente invention concerne un ensemble d'admission d'air pour un moteur automobile, qui comprend un dispositif de redressement d'un flux d'air d'un tuyau d'admission d'air d'un véhicule automobile, pour optimiser la lecture d'un débitmètre.

Les moteurs à combustion interne fonctionnent sur le principe de la combustion d'air et de carburant. Dans le cas des véhicules automobiles, l'air utilisé provient d'une ligne d'admission d'air qui permet de capter de l'air à l'extérieur du véhicule et de le filtrer avant qu'il ne soit injecté dans le moteur.

D'une manière courante, les véhicules automobiles comprennent un débitmètre positionné dans un tuyau de la ligne d'admission d'air. Le débitmètre est un instrument de mesure permettant de détecter le débit d'air entrant dans le moteur. Cette détection permet notamment de contrôler le rapport stoechiométrique entre l'air et le combustible dans le moteur. De plus, le débitmètre permet aussi de contrôler le taux de recyclage des gaz d'échappement qui sont réinjectés dans le moteur. Par extension, les mesures du débitmètre sont utilisées pour les homologations aux normes de pollution des véhicules.

Le débitmètre est donc un élément essentiel dont les mesures doivent être les plus précises possible. Or, le plus souvent, le débitmètre est positionné dans le tuyau d'admission d'air à la sortie de la boite à filtre, dans une zone dans laquelle le flux d'air est instable. En outre, en raison des contraintes de place dans le compartiment moteur du véhicule, le débitmètre est souvent positionné à la sortie d'un coude, ce qui augmente l'instabilité du flux d'air. L'instabilité du flux d'air fausse certaines mesures du débitmètre. Pour stabiliser le flux d'air il est connu de positionner une grille standard en amont du débitmètre. Cette disposition permet de redresser (stabiliser) une partie du flux d'air, mais s'avère insuffisante sur l'ensemble de la plage de débits d'air du fonctionnement du moteur. Ainsi, cette disposition se révèle, par exemple, insatisfaisante pour les bas débits d'air.

Des solutions permettant de mesurer de manière plus précise le débit d'air par un débitmètre dans une ligne d'admission d'air ont été par ailleurs décrites dans les documents GB 2 402 971, US 5 918 279 et DE 41 17 110.

Dans ce contexte, la présente invention a pour objectif de fournir un ensemble d'admission d'air pour un moteur automobile qui permette de stabiliser le flux d'air sur l'ensemble de la plage de débits d'air du fonctionnement du moteur, pour permettre une mesure plus précise du débit d'air par un débitmètre.

L'invention concerne un ensemble d'admission d'air selon la revendication indépendante 1.

D'une manière particulièrement avantageuse, les différences de dimensions entre les cellules permettent de stabiliser le flux d'air sur l'ensemble de la plage de débits d'air du fonctionnement du moteur, pour permettre une mesure précise du débit d'air par un débitmètre. Ainsi, l'invention propose un ensemble d'admission d'air pour un moteur automobile qui permet de stabiliser le flux d'air sur l'ensemble de la plage de débits d'air du fonctionnement du moteur, pour permettre une mesure précise du débit d'air par un débitmètre.

Les parois annulaires peuvent être reliées par un réseau d'entretoises.

Selon une disposition particulière, la partie périphérique peut présenter une section transversale sensiblement circulaire.

Le tuyau d'admission d'air peut présenter un coude en aval duquel est positionné le dispositif de redressement d'un flux d'air.

Les cellules de plus faibles dimensions du dispositif de redressement d'un flux d'air peuvent être positionnées vers l'intérieur du coude.

D'autres caractéristiques et avantages de la présente invention ressortiront clairement de la description détaillée ci-après de deux modes de réalisation de l'invention donnés à titre d'exemples non limitatifs, en référence aux dessins annexés dans lesquels :
- La figure 1 est une représentation schématique en perspective d'un ensemble d'admission d'air selon un premier mode de réalisation qui n'est pas conforme à l'invention revendiquée ;
- La figure 2 est une représentation schématique de face d'un dispositif de redressement selon le premier mode de réalisation;
- La figure 3 est une vue de face d'un dispositif de redressement selon le premier mode de réalisation;
- La figure 4 est une représentation schématique en perspective d'un ensemble d'admission d'air selon un deuxième mode de réalisation de l'invention ;
- La figure 5 est une représentation schématique de face d'un dispositif de redressement selon le deuxième mode de réalisation de l'invention ;
- La figure 6 est une représentation schématique de côté d'un dispositif de redressement selon l'invention ;
- La figure 7 est une représentation du comportement d'un flux d'air dans un coude dépourvu de dispositif de redressement ;
- La figure 8 est tableau comparatif du comportement d'un flux d'air dans un coude dépourvu de dispositif de redressement, dans un coude comprenant un dispositif de redressement de l'art antérieur et dans un ensemble d'admission d'air selon l'invention ;
- La figure 9 est un graphique comparatif de l'évolution de la vitesse d'écoulement d'un flux d'air dans un coude, en fonction de la distance par rapport au coude, pour un coude dépourvu de dispositif de redressement, dans un coude comprenant un dispositif de redressement de l'art antérieur et dans un ensemble d'admission d'air selon l'invention.

L'invention porte sur un ensemble d'admission d'air 100, pour un véhicule automobile.

L'ensemble d'admission d'air 100 comprend un tuyau d'admission d'air 101 présentant un coude 104 en aval duquel sont positionnés un dispositif de redressement d'un flux d'air 1 et un débitmètre 102.

Le dispositif de redressement d'un flux d'air 1 comprend une partie périphérique 3 et une partie ajourée 4 fixée à la partie périphérique 3.

Le dispositif de redressement d'un flux d'air 1 peut, par exemple, être réalisé en tôle, ou peut être réalisé en matériau plastique moulé ou injecté.

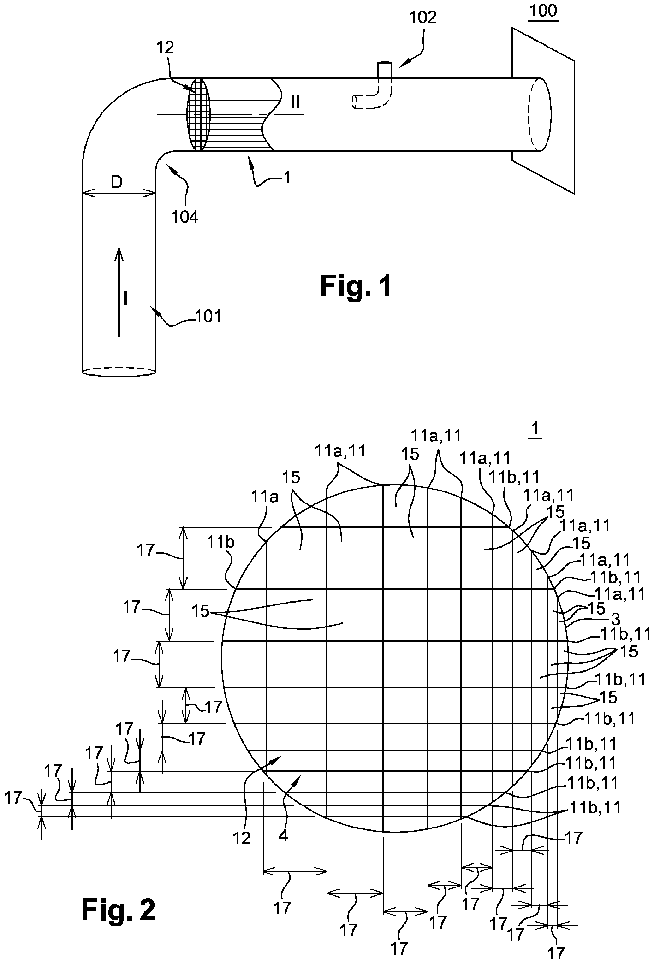

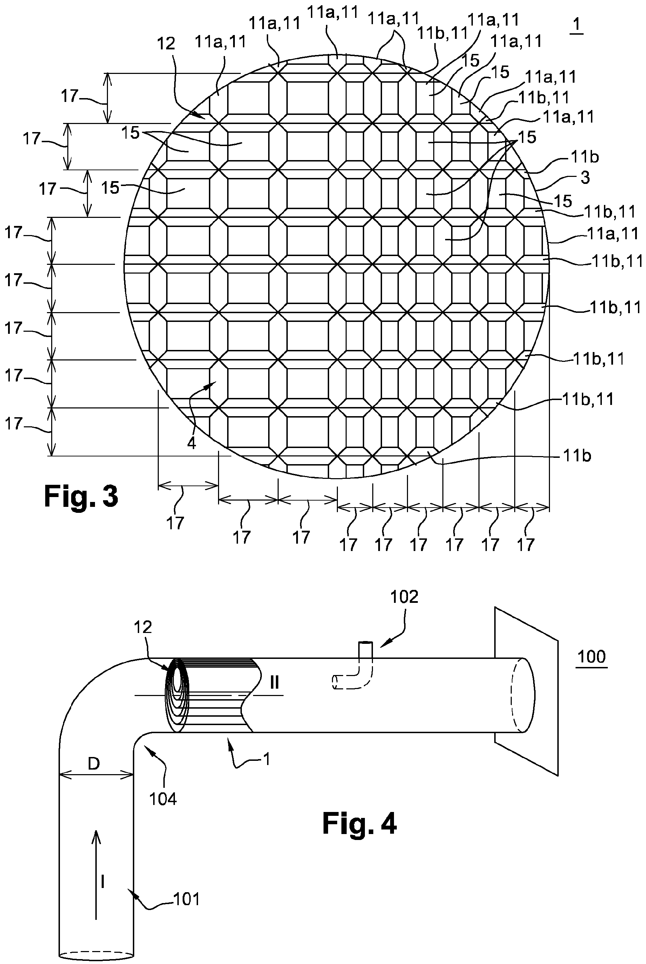

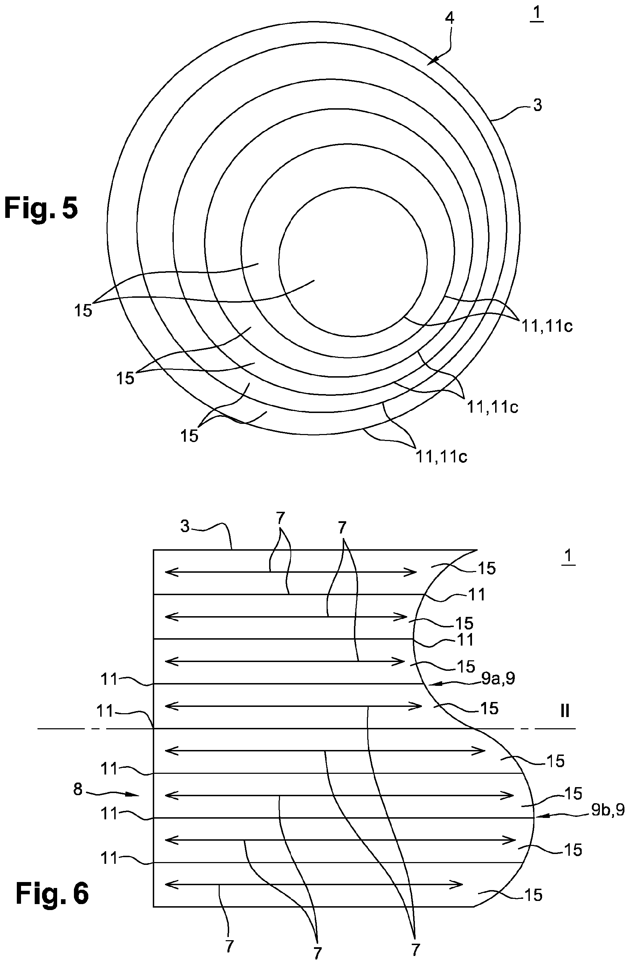

Selon les exemples ici présentés, la partie périphérique 3 présente une section transversale sensiblement circulaire. La partie périphérique 3 peut être dimensionnée pour être ajustée serrée dans un tuyau d'admission d'air 101. Selon les exemples présentés en figure 1, 4 et 6, la partie périphérique 3 présente une première face transversale 8 et une deuxième face transversale 9. Entre la première face transversale 8 et la deuxième face transversale 9, la partie périphérique 3 présente une cote longitudinale 7 variable suivant un axe longitudinal II de la partie périphérique. Selon l'exemple présenté en figure 4, la deuxième face transversale 9 présente une portion concave 9a et une portion convexe 9b. Cette géométrie particulière de la deuxième face transversale 9 fait varier la cote longitudinale 7 entre un minimum et un maximum. La cote longitudinale 7 variable est une disposition technique de l'invention particulièrement avantageuse dont la fonction sera détaillée ultérieurement.

La partie ajourée 4 est fixée à la partie périphérique 3. Selon les exemples ici présentés, la partie ajourée 4 peut être venue de moulage avec la partie périphérique 3.

La partie ajourée 4 comprend une pluralité de parois 11 définissant des cellules 15.

Selon un premier mode de réalisation présenté en figure 2, la partie ajourée 4 comprend une première série de parois 11a planes orientées suivant l'axe longitudinal II de la partie périphérique 3, parallèles entre elles, et une deuxième série de parois 11b planes orientées suivant l'axe longitudinal II de la partie périphérique 3, parallèles entre elles et sécantes au parois 11a planes de la première série pour former une grille 12.

Chaque paroi 11a et 11b plane présente une cote longitudinale égale à la cote longitudinale 7 de la partie périphérique 3.

La grille 12 définit une pluralité de cellules 15 traversantes. Les parois 11a et 11b planes sont écartées selon un pas 17 variable et irrégulier, de telle sorte que les cellules 15 présentent des dimensions différentes. La fonction des cellules 15 présentant des dimensions différentes sera détaillée ultérieurement.

Selon un deuxième mode de réalisation présenté en figure 3, la partie ajourée 4 comprend une pluralité de parois 11c annulaires. Chaque paroi 11c annulaire présente une cote longitudinale égale à la cote longitudinale 7 de la partie périphérique 3. Les parois 11c annulaires sont maintenues par un réseau d'entretoises (non représenté).

Les parois 11c annulaires délimitent des cellules 15 traversantes. Les parois 11c annulaires sont excentriques les unes par rapport aux autres, et sont aussi excentriques par rapport à la partie périphérique 3. Ainsi les cellules 15 entre les parois 11c annulaires présentent des dimensions distinctes.

Le dispositif de redressement d'un flux d'air 1 est positionné en amont du débitmètre 102 par rapport au sens I de circulation du flux d'air dans le tuyau d'admission d'air 101. Le dispositif de redressement du flux d'air 1 peut être positionné de sorte que les cellules 15 de plus faibles dimensions soient orientées vers l'intérieur du coude 104.

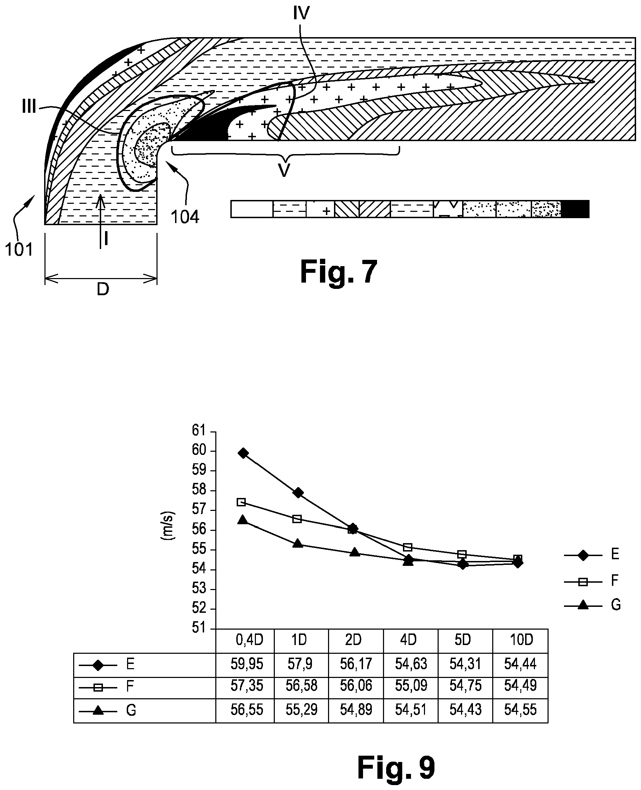

En condition d'utilisation, tel que représenté sur la figure 7, dans un tuyau d'admission d'air 101 démuni de dispositif de redressement d'un flux d'air 1, on observe que le flux d'air I présente une vitesse plus importante dans la zone III à l'intérieur du coude 104, que dans le reste du coude 104. Cette différence de vitesse dans le coude 104, engendre une dépression à la sortie du coude 104, qui se traduit par une forte perte de vitesse du flux dans la zone IV à l'issue du coude 104. Il en résulte des turbulences et un important décalage de vitesses au sein du flux d'air I, dans la zone V dans laquelle le débitmètre 102 est usuellement positionné.

Comme représenté sur les figures 1 et 4, le dispositif de redressement d'un flux d'air 1 est positionné dans la zone IV. Ainsi, à la sortie du coude 104, le flux I traverse le dispositif de redressement d'un flux d'air 1. En traversant le dispositif de redressement d'un flux d'air 1, le flux d'air I s'écoule dans les différentes cellules 15. Les différences de volumes entre les cellules 15 permettent de stabiliser le flux d'air I sur toute la plage de débits d'air du fonctionnement du moteur, pour permettre une mesure plus précise du débit d'air par le débitmètre 102. Par stabiliser, on entend que le dispositif de redressement d'un flux d'air 1 permet d'homogénéiser les vitesses d'écoulement du flux d'air I.

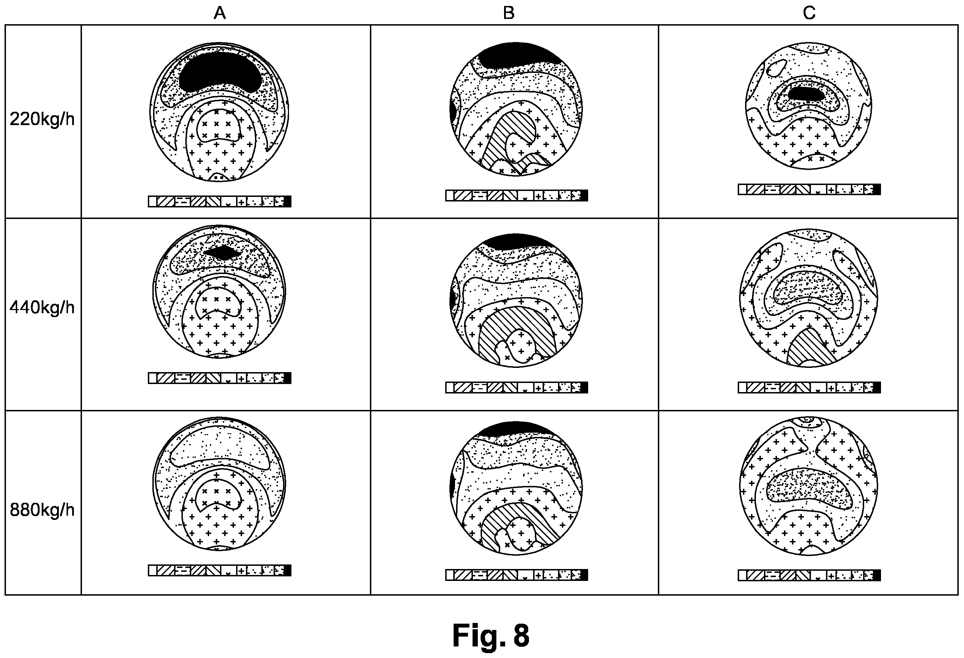

Pour apprécier quantitativement les améliorations apportées par l'invention, on peut se reporter à la figure 8 qui présente une série de vues en coupe comparatives du comportement du flux d'air I à l'issue de la zone IV, pour un tuyau d'admission d'air dépourvu de tout système de redressement (colonne A), pour un tuyau d'admission d'air muni d'un système de l'art antérieur (colonne B) et pour un ensemble d'admission d'air 100 selon l'invention (colonne C). Les coupes sont réalisées dans un plan transversal du coude 104, et sont données pour trois valeurs de débit différentes : 220 kg/h, 440 kg/h et 880 kg/h. Ainsi, il apparaît que pour les trois vitesses testées, le dispositif de redressement d'un flux d'air 1 permet d'obtenir un flux d'air I présentant une meilleure homogénéité de vitesses d'écoulement.

On peut aussi se reporter au graphique de la figure 9 qui représente la vitesse moyenne d'écoulement en fonction de la distance au coude 104. La distance est calculée en multiple du diamètre D du coude 104. Le graphique permet de comparer la vitesse moyenne d'écoulement pour un coude dépourvu de tout système de redressement (courbe E), pour un coude muni d'un système de l'art antérieur (courbe F) et pour un ensemble d'admission d'air 100 selon l'invention (courbe G).

Comme on peut l'observer, l'ensemble d'admission d'air 100 présente les vitesses moyennes d'écoulement les plus faibles pour la région comprise entre 0.4D et 4D, cette région correspondant à la zone de positionnement du débitmètre 102.

Ainsi, l'ensemble d'admission d'air 100 permet de ralentir et homogénéiser la vitesse du flux d'air pour permettre une meilleure fiabilité de lecture du débit par le débitmètre.

## Revendications

1. Ensemble d'admission d'air (100) pour un moteur automobile, comprenant un tuyau d'admission d'air (101), un débitmètre (102) et un dispositif de redressement d'un flux d'air (1) positionné en amont du débitmètre (102) par rapport au sens (I) de circulation du flux d'air dans le tuyau (101), le dispositif de redressement d'un flux d'air (1) comprenant une partie périphérique (3) et une partie ajourée (4) fixée à la partie périphérique (3), ladite partie ajourée (4) comprenant une pluralité de parois (11c) annulaires, la partie périphérique (3) comprenant une première face transversale (8) et une deuxième face transversale (9) et la partie ajourée (4) comprenant une pluralité de parois (11) définissant une pluralité de cellules (15) traversantes, lesdites cellules (15) entre les parois (11c) annulaires présentant des dimensions distinctes, l'ensemble d'admission d'air (100) étant **caractérisé en ce que**, entre la première face transversale (8) et la deuxième face transversale (9), la partie périphérique (3) présente une cote longitudinale (7) variable suivant un axe longitudinal (II) de la partie périphérique, la deuxième face transversale (9) présentant une portion concave (9a) et une portion convexe (9b) faisant varier la côte longitudinale (7) entre un maximum et un minimum et **en ce que** les parois (11c) annulaires sont excentriques les unes par rapport aux autres et sont aussi excentriques par rapport à la partie périphérique (3).

2. Ensemble d'admission d'air (100) selon la revendication 1, **caractérisé en ce que** les parois (11c) annulaires sont reliées par un réseau d'entretoises.

3. Ensemble d'admission d'air (100) selon la revendication 1 ou 2, **caractérisé en ce que** la partie périphérique (3) présente une section transversale sensiblement circulaire.

4. Ensemble d'admission d'air (100) selon l'une quelconque des revendications 1 à 3, **caractérisé en ce que** le tuyau d'admission d'air (101) présente un coude (104) en aval duquel est positionné le dispositif de redressement d'un flux d'air (1).

5. Ensemble d'admission d'air (100) selon la revendication 4, **caractérisé en ce que** les cellules (15) de plusfaibles dimensions du dispositif de redressement d'un flux d'air (1) sont positionnées vers l'intérieur du coude (104).

## Patentansprüche

1. Lufteinlassbaugruppe (100) für einen Fahrzeugmotor, die ein Lufteinlassrohr (101), einen Durchflussmesser (102) und eine Vorrichtung zum Ausrichten eines Luftstroms (1) umfasst, die in Bezug auf die Strömungsrichtung (I) des Luftstroms im Rohr (101) stromaufwärts des Durchflussmessers (102) angeordnet ist, wobei die Vorrichtung zum Ausrichten eines Luftstroms (1) einen Umfangsteil (3) und einen am Umfangsteil (3) befestigten durchbrochenen Teil (4) umfasst, wobei der durchbrochene Teil (4) eine Vielzahl von ringförmigen Wänden (11c) umfasst, wobei der Umfangsteil (3) eine erste Querfläche (8) und eine zweite Querfläche (9) umfasst, und der durchbrochene Teil (4) eine Vielzahl von Wänden (11) umfasst, die eine Vielzahl von durchgehenden Zellen (15) definieren, wobei die Zellen (15) zwischen den ringförmigen Wänden (11c) unterschiedliche Abmessungen aufweisen, wobei die Lufteinlassbaugruppe (100) **dadurch gekennzeichnet ist, dass** der Umfangsteil (3) zwischen der ersten Querfläche (8) und der zweiten Querfläche (9) ein entlang einer Längsachse (II) des Umfangsteils variables Längslinie (7) aufweist, wobei die zweite Querfläche (9) einen konkaven Abschnitt (9a) und einen konvexen Abschnitt (9b) aufweist, die die Längslinie (7) zwischen einem Maximum und einem Minimum variieren lassen, und dadurch, dass die ringförmigen Wände (11c) zueinander exzentrisch sind und auch in Bezug auf den Umfangsteil (3) exzentrisch sind.

2. Lufteinlassbaugruppe (100) nach Anspruch 1, **dadurch gekennzeichnet, dass** die ringförmigen Wände (11c) durch ein Netz von Abstandshaltern verbunden sind.

3. Lufteinlassbaugruppe (100) nach Anspruch 1 oder 2, **dadurch gekennzeichnet, dass** der Umfangsteil (3) einen im Wesentlichen kreisförmigen Querschnitt aufweist.

4. Lufteinlassbaugruppe (100) nach einem der Ansprüche 1 bis 3, **dadurch gekennzeichnet, dass** das Lufteinlassrohr (101) ein Kniestück (104) aufweist, stromabwärts dessen die Vorrichtung zum Ausrichten eines Luftstroms (1) angeordnet ist.

5. Lufteinlassbaugruppe (100) nach Anspruch 4, **dadurch gekennzeichnet, dass** die Zellen (15) mit kleineren Abmessungen der Vorrichtung zum Ausrichten eines Luftstroms (1) zur Innenseite des Kniestücks (104) hin angeordnet sind.

## Claims

1. An air intake assembly (100) for an automobile engine, comprising an air intake pipe (101), a flowmeter (102) and an air flow straightening device (1) positioned upstream of the flowmeter (102) with respect to the direction (I) of circulation of the air flow in the pipe (101), the device for straightening an air flow (1) comprising a peripheral part (3) and a perforated part (4) fixed to the peripheral part (3), said perforated part (4) comprising a plurality of annular walls (11c), the peripheral part (3) comprising a first transverse face (8) and a second transverse face (9) and the perforated part (4) comprising a plurality of walls (11) defining a plurality of through cells (15), said cells (15) between the annular walls (11c) having distinct dimensions, the air intake assembly (100) being **characterized in that**, between the first transverse face (8) and the second transverse face (9), the peripheral part (3) has a longitudinal dimension (7) that varies along a longitudinal axis (II) of the peripheral part, the second transverse face (9) having a concave portion (9a) and a convex portion (9b) varying the longitudinal side (7) between a maximum and a minimum and **in that** the annular walls (11c) are eccentric with respect to each other and are also eccentric with respect to the peripheral part (3).

2. The air intake assembly (100) according to claim 1, **characterized in that** the annular walls (11c) are connected by a network of spacers.

3. The air intake assembly (100) according to claim 1 or 2, **characterized in that** the peripheral part (3) has a substantially circular cross section.

4. The air intake assembly (100) according to any one of claims 1 to 3, **characterized in that** the air intake pipe (101) has a bend (104) downstream of which is positioned the device for straightening an air flow (1).

5. The air intake assembly (100) according to claim 4, **characterized in that** the cells (15) of smaller dimensions of the device for straightening an air flow (1) are positioned towards the inside bend (104).
